Europäisches Patentamt

European Patent Office

Office européen des brevets

(19)

(11) **EP 1 289 634 B1**

(12) **FASCICULE DE BREVET EUROPEEN**

(45) Date de publication et mention
de la délivrance du brevet:
**10.03.2004   Bulletin 2004/11**

(21) Numéro de dépôt: **01940673.5**

(22) Date de dépôt: **01.06.2001**

(51) Int Cl.7: **B01D 65/10**, G01N 15/08

(86) Numéro de dépôt international:
**PCT/FR2001/001713**

(87) Numéro de publication internationale:
**WO 2001/091891 (06.12.2001 Gazette 2001/49)**

(54) **PROCEDE DE CONTROLE DE L'INTEGRITE D'UN MODULE, OU D'UN SYSTEME DE MODULES, DE NANOFILTRATION OU D'OSMOSE INVERSE**

**VERFAHREN ZUR ÜBERWACHUNG DER UNVERSEHRTHEIT EINES MODULS ODER MODULSYSTEMS FÜR DIE NANOFILTRATION ODER UMKEHROSMOSE**

**METHOD FOR CONTROLLING THE INTEGRITY OF A NANOFILTRATION OR REVERSE OSMOSIS MODULE, OR MODULE SYSTEM**

(84) Etats contractants désignés:
**AT BE CH CY DE DK ES FI FR GB GR IE IT LI LU MC NL PT SE TR**

(30) Priorité:  **02.06.2000  FR 0007106**

(43) Date de publication de la demande:
**12.03.2003   Bulletin 2003/11**

(73) Titulaires:
 • **Vivendi Universal**
   **75380 Paris Cedex 08 (FR)**
 • **Syndicat des Eaux d'Ile de France (SEDIF)**
   **75006 Paris (FR)**

(72) Inventeurs:
 • **VENTRESQUE, Claire**
   **F-92700 Colombes (FR)**

 • **GISCLON-LALLEMAND, Valérie**
   **F-78600 Maisons Laffitte (FR)**
 • **BABLON, Guy**
   **F-78810 Feucherolles (FR)**
 • **CHAGNEAU, Gérard**
   **F-75012 Paris (FR)**

(74) Mandataire: **Santarelli**
   **14, avenue de la Grande Armée,**
   **B.P. 237**
   **75822 Paris Cedex 17 (FR)**

(56) Documents cités:
   **US-A- 4 188 817**

**Description**

La présente invention concerne un procédé destiné à contrôler l'intégrité de systèmes de modules de nanofiltration ou d'osmose inverse tels que ceux qui sont utilisés dans les processus de séparation et de concentration de solutions, notamment dans le domaine du traitement des eaux.

La technique d'épuration de l'eau d'alimentation par membranes présente de plus en plus de réalisations industrielles de toutes capacités. Les domaines de filtration des techniques membranaires se recoupent mais généralement, on délimite :

- la microfiltration, autour de diamètres de pores d'environ 0.5μm,
- l'ultrafritration, autour de diamètres de pores de 10 nm,
- la nanofiltration, d'un pouvoir de coupure d'environ 1 nanomètre ou 250 daltons (en pratique de 200 à 300 daltons en ce qui concerne les membranes de nanofiltration actuellement sur le marché),
- l'osmose inverse en-dessous de 1 nanomètre.

La nanofiltration permet d'éliminer une bonne partie de la pollution organique dissoute et de certains ions minéraux. En effet elle permet l'élimination de molécules organiques solubles et de certains ions minéraux d'assez forte taille « apparente ». De ce fait, la nanofiltration recouvre le domaine de l'osmose inverse. La nanofiltration est aussi appelée « osmose inverse basse pression » ou « hyperfiltration ».

Du fait de ses seuils de coupure très bas, la nanofiltration assure une stérilité microbienne totale.

Toutefois, dans les installations industrielles, les membranes de nanofiltration sont montées au sein de modules de nanofiltration, et ces modules de nanofiltration sont eux-mêmes mis en oeuvre grâce à des agencements d'une grande quantité de modules capables d'assurer le débit requis. Ainsi, bien que la nanofiltration soit intrinsèquement imperméable aux bactéries et aux virus, au niveau d'une membrane, l'agencement d'une grande quantité de modules peut comporter des défauts de connection qui remettent en cause l'imperméabilité des modules.

De plus, il existe toujours la possibilité de modules défaillants ou mal construits (mauvais joints de colle des membranes, trous non détectés dans la membrane...).

Il y a deux configurations générales couramment utilisées pour monter des membranes de nanofiltration au sein d'un module :

- une configuration dite « spiralée » mettant en oeuvre des feuilles de membrane planes, séparées par des espaceurs, enroulées autour d'un tube récoltant le perméat (c'est à dire la partie du fluide à traiter qui a traversé les membranes, par opposition au concentrat qui est la partie du fluide qui n'a pas traversé ces membranes et dans laquelle se sont concentrées les impuretés retenues par les membranes),
- une configuration dite « à fibre creuses » où les membranes apparaissent sous forme de faisceaux de fibres capillaires.

Quel que soit le type de configuration, les modules (en général' d'un diamètre de 8 pouces et d'une longueur de 40 pouces pour les installations industrielles de traitement d'eau) sont connectés les uns aux autres, en principe en série, au sein de tubes dits « tubes de pression ». Un système complet de nanofiltration peut comporter plusieurs tubes de pression montés en parallèle, classiquement fixés sur des blocs ( ou skids), voire le plus souvent plusieurs blocs (ou étages) formés chacun de plusieurs tubes.

Le problème qui se pose en pratique est celui de la détection d'un défaut d'intégrité d'un module, ou d'un système constitué de plusieurs modules, dont l'origine se situe soit au niveau des membranes elles-mêmes, soit au niveau des joints, et qui se traduit par un passage du fluide directement depuis le côté sale de la membrane (concentrat) vers le côté propre (perméat) au travers de la membrane percée ou du joint déficient.

Il existe ainsi deux grandes catégories de procédés de contrôle appliqués à des modules pris individuellement, c'est à dire de procédés de détection de la modification de l'intégrité des modules de nanofiltration ou d'osmose inverse :

- procédés mettant en oeuvre un contrôle de la qualité de l'eau produite, à savoir du perméat (notamment par mesure de conductivité, ou par des analyses bactériologiques),
- procédés mettant en oeuvre une détection de fuite à l'aide d'un processus physique (mesure d'un débit, mesure de vide par exemple).

Ces procédés sont mis en oeuvre sur les modules de filtration pris individuellement et généralement placés sur des bancs de tests ; ils ne peuvent pas être mis à profit pour repérer des déficiences de connections à l'intérieur d'un système en fonctionnement.

On peut également citer le procédé de détection de fuite par mesure de bruit proposé dans le document WO99/44728, mais ce procédé n'est pas applicable à l'osmose inverse ni à la nanofiltration, ces deux derniers procédés nécessitant une opération en mode tangentiel des membranes. En effet, ce mode met en oeuvre des pressions et des vitesses plus importantes, en conséquence, les bruits de fuites ne peuvent pas être distingués des bruits ambiants.

Il existe aussi des procédés qui s'appliquent à des systèmes de modules globaux ; ces procédés font en principe appel à des mesures de conductivité de l'eau produite par les systèmes. Ainsi, pour le dessalement d'eau de mer par osmose inverse, une mesure de conductivité est en général suffisante. Par contre, pour les systèmes à membranes de nanofiltration, la mesure de conductivité de l'eau produite par les systèmes ne permet pas de détecter des défauts avec la précision nécessaire. En effet, la nanofiltration laisse, par nature, passer un grand nombre de sels tels le calcium, les chlorures, les nitrates..., sans que cela soit imputable à un défaut d'intégrité du système.

Le document US-A-4 188 817 décrit une méthode de détection de fuite dans une unité de séparation membranaire par une mesure de la conductivité du perméat.

L'invention a pour objet de pallier les inconvénients des procédés connus, grâce à un procédé permettant de détecter une fuite, en particulier de micro-organismes vivants (tels que bactéries, virus, protozoaires, et plus particulièrement Cryptosporidium et Giardia), au travers d'un module de nanofiltration ou d'osmose inverse, ou dans un système formé d'une pluralité de tels modules, sans arrêt de production, cette détection pouvant être réalisée en pseudo-continu, c'est à dire de manière régulière, en quelques minutes à peine, de manière simple et fiable, en pratique par une simple mesure de concentration.

En fait l'invention est fondée sur la découverte qu'il est très généralement possible de choisir, dans le fluide à filtrer, un composé dont la teneur est normalement très faible dans le perméat en l'absence de fuite, mais dont cette teneur augmente très rapidement en cas de défaillance d'une membrane ou d'un joint de connection, ce composé étant tel que sa concentration augmente, en cas de dégradation des membranes ou des joints, plus tôt que la concentration en germes vivants.

En effet, les membranes de nanofiltration ou d'osmose inverse ne sont pas adaptées à éliminer des matières en suspension. Au contraire, ces procédés nécessitent d'être alimentés avec des eaux dont le contenu en particules non dissoutes est déjà très faible. N'ayant pas de particules en entrée, on ne peut donc pas utiliser des mesures liées aux matières en suspension pour détecter les fuites (turbidité, comptages de particules, matières en suspension...).

Par contre les membranes de nanofiltration ou d'osmose inverse sont utilisées pour séparer les matières dissoutes. La taille des molécules retenues s'étale depuis les macromolécules organiques jusqu'aux ions. Une plus ou moins grande séparation des matières dissoutes est assurée en fonction du pouvoir de séparation de la membrane (très grand pour l'osmose inverse, moins grand pour la nanofiltration).

Pour les membranes d'osmose inverse, la rétention des sels, toutes espèces confondues est supérieure à 90%. Pour les membranes les plus « ouvertes » de la gamme de nanofiltration, la rétention des sels est fonction de la qualité de l'eau en entrée (effet Donnan), de la charge des sels, de leur hydratation, de leur taille. Il est courant, sur les dernières générations de membranes de nanofiltration, que le calcium et les hydrogénocarbonates par exemple passent au travers des membranes à plus de 50%. Pour ces membranes, une mesure globale de la quantité de sel dans l'eau produite (par exemple par la conductivité) ne permet pas de détecter les fuites.

Par contre, certains ions polyvalents, tels les sulfates, le fer, sont toujours parfaitement retenus par les membranes, qu'elles soient d'osmose inverse ou de nanofiltration. Lorsqu'une fuite apparaît dans le système, la concentration en ces ions polyvalents devient donc supérieure à celle d'un système intègre.

Pour les membranes de nanofiltration les plus « ouvertes » les gammes possibles de passage en composé analysable exprimé en % sont décrites dans le tableau 1 donnant, à titre d'exemple d'utilisation de la nanofiltration sur une eau naturelle donnée, l'indication du degré de passage des divers composés identifiés au travers des membranes de nanofiltration. Dans ce tableau, le passage en composé est formulé comme suit :

$$\text{Passage (\%)} = 100 \times (\text{concentration du composé dans le perméat / concentration du composé coté concentrat})$$

La concentration du composé coté concentrat est définie comme la moyenne entre l'entrée du tube et le concentrat du tube.

Il est intéressant de noter qu'il est possible d'identifier un composé présent dans l'eau d'alimentation des membranes mais normalement arrêté dans une proportion importante par ces membranes, capable en conséquence d'être détecté lorsqu'une fuite concentrat/perméat apparaît et qui soit facilement dosable sur le terrain. Il est même généralement possible d'identifier un tel composé qui soit à la fois présent en grande quantité dans l'eau d'alimentation et fortement rejeté par les membranes (passage le plus faible possible).

Les ions ou composés tels les chlorures, les bicarbonates, faciles à doser, présentent un passage qui peut être jugé trop important. Par ailleurs, le taux de passage de certains composés est fortement lié au pH de l'eau : c'est le cas notamment des composés carbonatés qui peuvent passer sous forme d'acide carbonique, idem pour les acides siliciques ou boriques qui sont moléculaires sous leur formes acide et passent donc les membranes contrairement à leurs formes ioniques.

Par contre l'ion sulfate présente de nombreux avantages :

- il est présent à l'état naturel dans les eaux de mer et les eaux superficielles,
- étant un ion d'acide fort, sa forme reste inchangée quel que soit le pH de l'eau,
- son dosage est rapide et peu onéreux,
- l'acide sulfurique est souvent ajouté pour ajuster le pH en entrée des membranes, ce qui augmente encore la quantité d'ions sulfate du coté concentrat des membranes.

Or il a pu être vérifié que, en cas de fuite dans une membrane de nanofittration ou d'osmose inverse, un composé tel que le sulfate commence à être détectable avant qu'une quantité détectable de micro-organismes rie passe à travers le défaut de la membrane ou des joints de connexion.

L'invention propose en conséquence un procédé de contrôle de l'intégrité d'un système de modules de nanofiltration ou d'osmose inverse destiné au traitement d'un fluide d'alimentation et de détection de fuites en micro-organismes vivants, chaque module comportant des membranes de nanofiltration ou d'osmose inverse et des joints de connexion de ces membranes, comportant des étapes consistant à :

- choisir dans le fluide d'alimentation à traiter un composé dissous présent en quantité significative mais normalement fortement arrêté par les membranes,
- mesurer la valeur de la concentration de ce composé dans une zone aval d'un module de ce système,
- comparer cette valeur mesurée à une valeur de référence, et
- reconnaître l'existence d'un défaut susceptible de laisser passer une quantité détectable de microorganismes lorsque cette valeur mesurée est supérieure à la valeur de référence.

De manière préférée, lorsque le système comporte au moins une pluralité de modules montés en parallèle, ce procédé comporte des étapes consistant à :

- mesurer la valeur de la concentration de ce composé dissous dans des zones analogues aval de chaque module de cette pluralité,
- comparer ces valeurs mesurées pour chaque module,
- identifier celles de ces valeurs qui sont les plus faibles, et identifier comme valeur de référence une valeur au moins approximativement égale à ces valeurs les plus faibles,
- reconnaître l'existence d'un défaut dans l'un des modules montés en parallèle lorsque la valeur mesurée pour ce module est supérieure à cette valeur de référence. Cela permet de détecter, sans référence donnée à l'avance, celui des modules montés en parallèle qui, le cas échéant, comporté un défaut

Bien entendu cela s'applique au cas où les modules montés en parallèle font chacun partie d'une série de modules. Ainsi selon un autre aspect préféré de l'invention, le procédé général défini ci-dessus est caractérisé en ce que, le système comportant une pluralité de séries de modules montées en parallèle, ce procédé comporte des étapes consistant à :

- mesurer la valeur de la concentration de ce composé dissous dans des zones analogues de chaque série,
- comparer ces valeurs mesurées pour chaque série,
- identifier celles de ces valeurs qui sont les plus faibles, et identifier comme valeur de référence une valeur au moins approximativement égale à ces valeurs les plus faibles,
- reconnaître l'existence d'un défaut dans l'une de ces séries lorsque la valeur mesurée de cette série est sensiblement supérieure à cette valeur de référence.

De manière avantageuse, pour identifier dans cette série l'élément qui comporte le défaut, le procédé de l'invention est caractérisé en ce qu'il comporte en outre des étapes consistant à :

- mesurer la valeur de la concentration de ce composé dissous en plusieurs zones choisies le long de la série de modules,
- prendre pour chaque valeur de la concentration mesurée pour une zone donnée une valeur de référence sensiblement égale à la valeur de la concentration mesurée pour la zone située immédiatement en amont de cette zone donnée ou, à défaut, de la zone située immédiatement en aval de celle-ci, et

* reconnaître l'existence d'un défaut dans une zone donnée lorsque la valeur qui y est mesurée est supérieure à la valeur de référence associée.

Dans ce dernier cas, il est avantageux que les zones choisies le long de la série de modules comportent au moins une zone aval de chaque module et une zone de chaque connecteur reliant un module au suivant. Ainsi chaque élément de la série est effectivement testé.

De manière avantageuse, pour obtenir une mesure représentative de la totalité de la série de modules considérée, on mesure la valeur de la concentration de ce composé dissous dans un échantillon de fluide prélevé dans une zone contenant du fluide provenant de chaque module de cette série.

Ce qui précède s'applique au cas d'une série de modules indépendamment de toute détection préalable de défaut dans celle-ci, auquel cas le procédé est caractérisé en ce que, le système comportant au moins une série de modules, ce procédé comporte des étapes consistant à :

* mesurer la valeur de la concentration de ce composé dissous en plusieurs zones choisies le long de la série de modules,
* prendre pour chaque valeur de la concentration mesurée pour une zone donnée une valeur de référence sensiblement égale à la valeur de la concentration mesurée pour la zone située immédiatement en amont de cette zone donnée ou, à défaut, de la zone située immédiatement en aval de celle-ci, et
* reconnaître l'existence d'un défaut dans une zone donnée lorsque la valeur qui y est mesurée est supérieure à la valeur de référence associée.

Dans ce cas aussi, comme dans le cas de plusieurs séries de modules, le procédé de l'invention est avantageusement caractérisé en ce que les zones choisies le long de la série de modules comportent au moins une zone aval de chaque module et une zone de chaque connecteur reliant un module au suivant.

De manière préférée, lorsque le système comporte au moins une série de modules, on mesure la valeur de la concentration de ce composé dissous dans un échantillon de fluide prélevé dans une zone contenant du fluide provenant de chaque module de cette série.

Il ressort clairement des explications données à propos du tableau 1 qu'il est tout particulièrement avantageux de choisir le composé dont on mesure la concentration comme étant le sulfate.

Des objets, caractéristiques et avantages de l'invention ressortent de la description qui suit, donnée à titre illustratif non limitatif en regard des dessins annexés sur lesquels :

* la figure 1a est le profil de la concentration en sulfate (en mg/l) le long d'une série de modules, ou tube, du premier étage d'un système de nanofiltration présentant une fuite à la connexion entre les second et troisième modules,
* la figure 1b est le profil de la concentration en sulfate (en mg/l) le long d'une série de modules, ou tube, du second étage de ce système, présentant un défaut à la connexion des troisième et quatrième modules,
* la figure 1c est le profil de la concentration en sulfate (en mg/l) le long d'une série de modules, ou tube, du troisième étage de ce système, présentant un défaut à la connexion des premier et second modules et à la connexion des troisième et quatrième modules,
* la figure 2a est un graphique montrant la conductivité de 28 tubes de pression du troisième étage,
* la figure 2b est un graphique montrant la teneur en sulfate en mg/l en sortie des mêmes tubes de pression qu'à la figure 2a,
* la figure 3 est un graphique montrant l'évolution de la teneur en sulfate, en mg/l, le long d'un tube formé de 5 modules,
* la figure 4 est un graphique montrant l'analyse bactériologique dans le perméat des tubes du système, et
* la figure 5 est un graphique montrant l'analyse bactériologique dans le perméat des blocs ou étages de ce système.

L'invention est décrite ci-dessous, dans un exemple préféré de mise en oeuvre, à propos d'un système comportant plusieurs étages (ou blocs) successifs, formés chacun de tubes montés en parallèle, chacun des tubes comportant des modules (6 dans l'exemple considéré, une autre valeur typique étant 7) dans le but de contrôle de l'intégrité du système de modules de nanofiltration ou d'osmose inverse et de détection de fuites en micro-organismes vivants (bactéries, virus, protozoaires, et plus particulièrement Cryptosporidium et Giardia) au travers de modules constitués de feuilles de membrane enroulées (spiralées) ou à fibres creuses et de joints. Le procédé comporte les étapes consistant à :

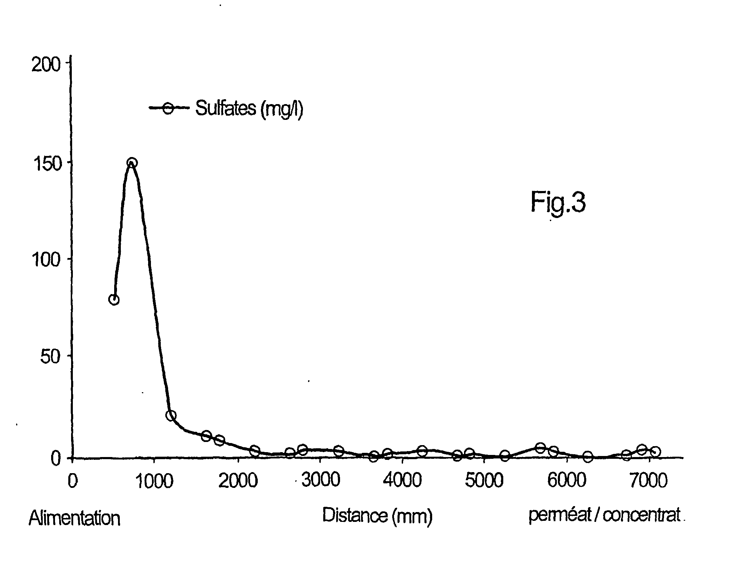

* prélever un échantillon d'eau dans le plus petit ensemble constitué par les tubes de perméat et les interconnecteurs (généralement un tube de pression équipé de 5 à 7 modules de filtration couplés par des connections),
* comparer la valeur en en ion sulfate ou tout autre composé fortement rejeté aux valeurs des autres tubes placés au même rang du système (aussi appelé étage). Un exemple est donné dans la figure 3.

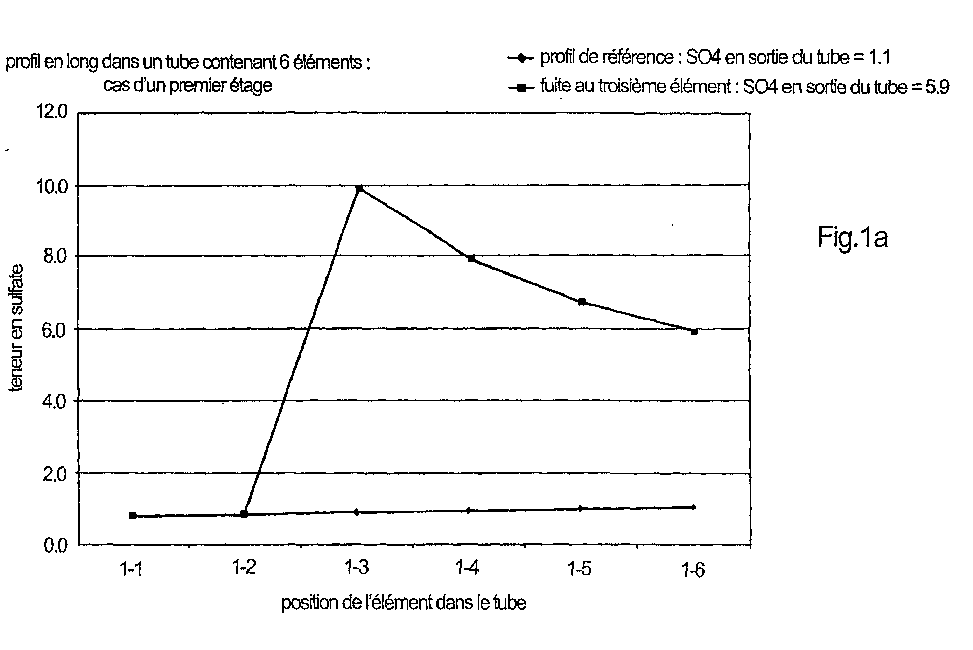

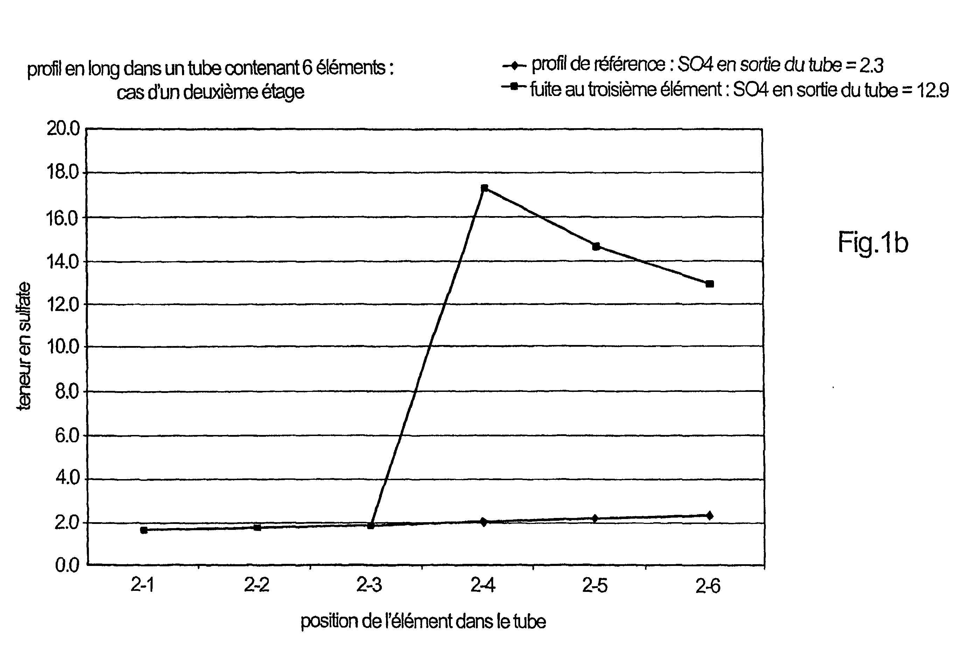

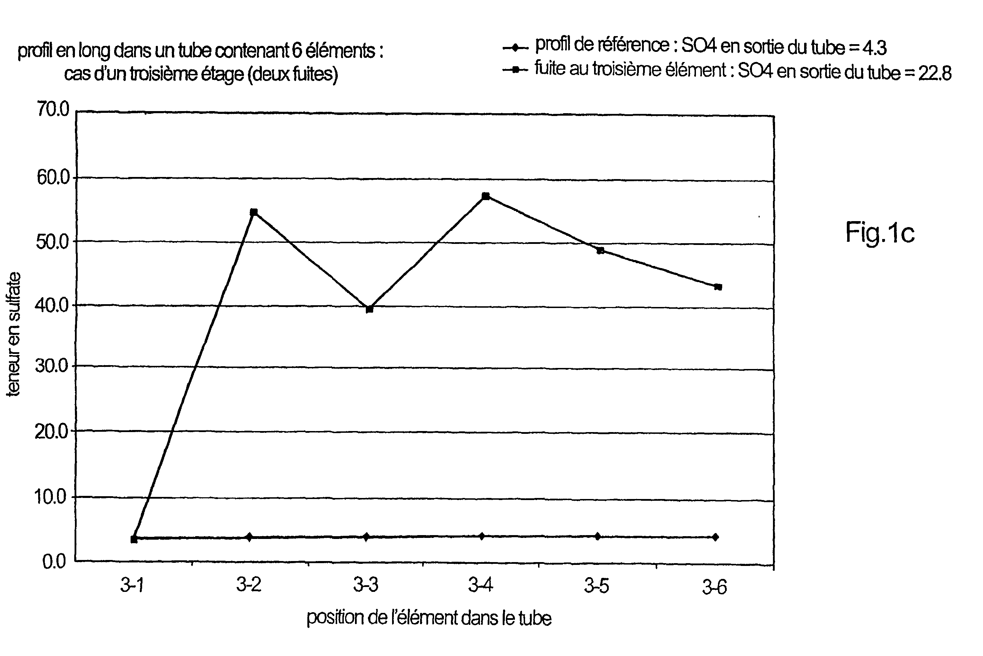

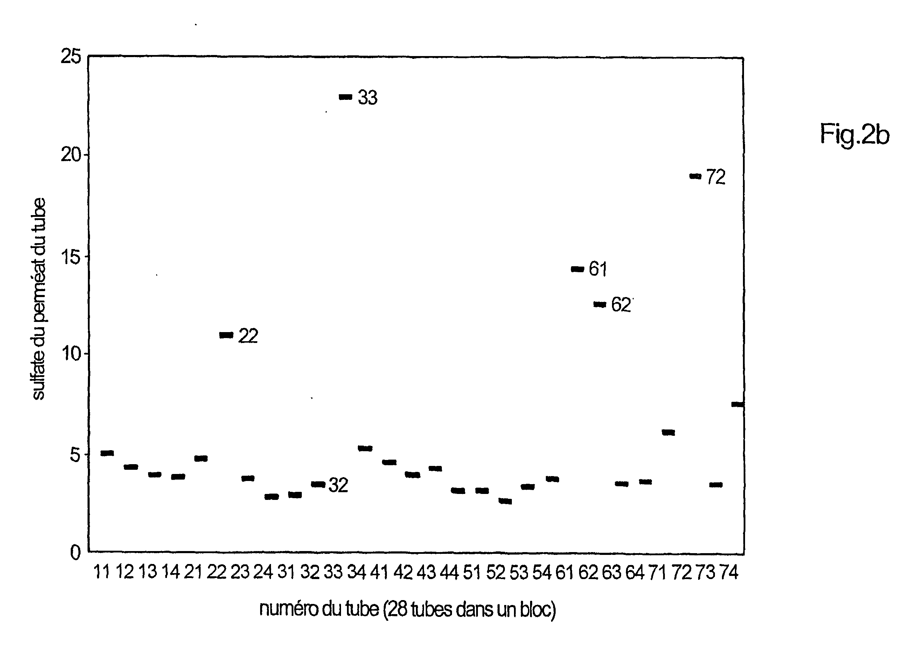

- Si l'échantillon d'eau ainsi prélevé présente une teneur en composé fortement rejeté (préférablement le sulfate) dans la gamme des tubes présentant une faible teneur en composé fortement rejeté, le tube ne présente pas de défaut d'intégrité, (voir figure 2b, cas du tube N°32 par exemple).
- Si l'échantillon d'eau ainsi prélevé présente une teneur en composé fortement rejeté (préférablement le sulfate) supérieure à l'ensemble des tubes présentant une faible teneur en composé fortement rejeté, procéder à un sondage qui permettra de détecter le module défaillant ou le joint défaillant, tel que décrit au point suivant,
- prélever à l'aide d'une sonde plusieurs échantillons d'eau tout au long de l'ensemble constitué par les tubes de perméat et les interconnecteurs,
- mesurer le taux de composé fortement rejeté (préférablement le sulfate) dans les échantillons suivant le protocole décrit par exemple dans la norme NFT90-040 ou toute autre méthode de terrain (kits disponibles dans le commerce).
- tracer le profil en long de la concentration le long du tube (voir Figures 1a,1b, 1c).

Le profil en long de la concentration le long du tube suit un schéma comme indiqué dans la figure 3. Le profil en long de référence peut être soit mesuré sur un tube dont la teneur en sulfate est la plus faible, soit calculé.

On peut selon l'intervention prévoir différentes utilisations parmi lesquelles on citera notamment la suivante.

A titre d'exemple, le procédé décrit ci-dessus a été appliqué à l'usine de nanofiltration de Méry sur Oise qui comprend 8 files de nanofiltration, chacune produisant 17500m$^3$ d'eau par jour et comprenant 1140 modules de nanofiltration de 37 m$^2$ environ chacun. Les modules de nanofiltration sont insérés dans des tubes de pression à raison de 6 modules par tube. Il y a donc 1520 tubes de pression dans la station de Méry-sur-Oise. Les modules sont disposés en trois étage de nanofiltration disposés comme suit :

- Le premier étage reçoit l'eau à traiter dont la teneur en sulfate est comprise entre 50 et 100mg/l environ,
- Le deuxième étage reçoit le concentrat du premier étage,
- Le troisième étage reçoit le concentrat du deuxième étage.

Une mesure systématique de la teneur en sulfate dans le perméat des 1520 tubes de pression a permis de corriger des erreurs de montage qui ont consisté essentiellement en :

1. Le remplacement de 11 joints d'interconnecteurs aplatis ou roulés,
2. La mise en place de 20 joints manquants,
3. La mise en place de 4 connecteurs manquants,
4. Le changement de quatre éléments de membrane cassés.

Si elles ne sont pas corrigées, ces erreurs de montage peuvent avoir pour conséquence une mauvaise étanchéité entre les compartiments concentrat et perméat des tubes de pression, laissant passer un débit de concentrat dans les collecteurs de perméat des tubes. Le concentrat peut être chargé en composés indésirables et surtout en bactéries.

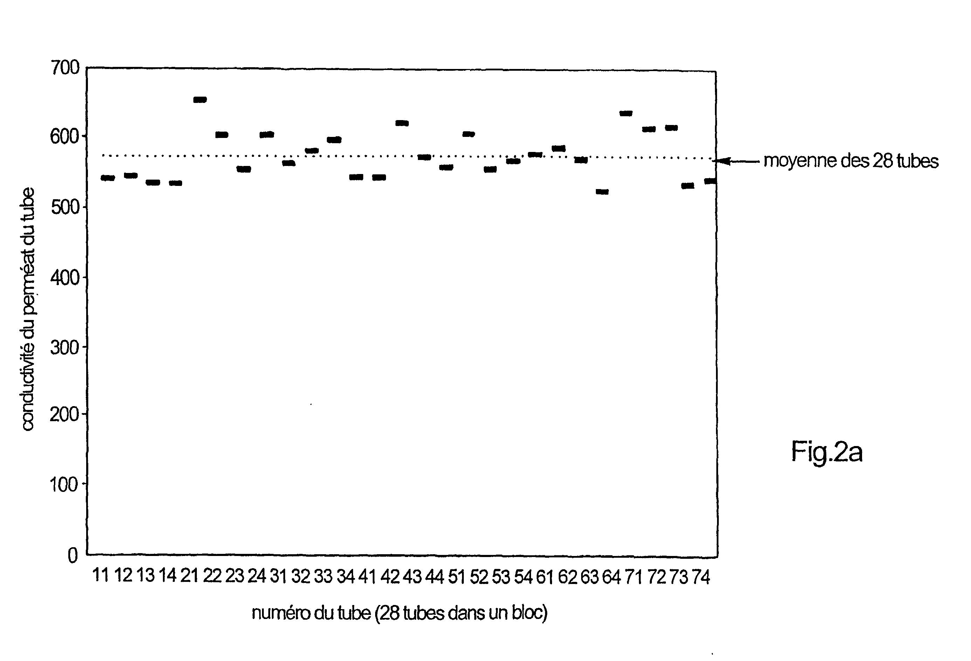

Ces erreurs de montage ne peuvent pas être détectées par des mesures de conductivité de l'eau produite par les tubes de pression car la nanofiltration laissant naturellement passer certains ions (comme les chlorures, le calcium, les hydrogénocarbonates), la conductivité du perméat des tubes est élevée par comparaison avec celle produite par osmose inverse. Un exemple est donné dans la figure 2a où un bloc de 28 tubes (troisième étage) à fait l'objet de mesure de conductivité. Aucun tube ne présente une conductivité atypique par comparaison avec les autres tubes du bloc.

Par contre, une mesure de sulfate dans les perméats des mêmes tubes a révélé que les tubes n° 22, 33, 61, 62 et 72 étaient atypiques, ils produisaient une eau dont la concentration en sulfate était significativement plus élevée (cf. fig 2b).

Le tableau 2 et la figure 3 montrent les résultats de sulfate lors du sondage du tube de pression N° 61 du bloc 4, la fuite en sulfate se situait au niveau du connecteur d'alimentation de la première membrane. La température de l'eau était de 4° C.

Des mesures bactériologiques des eaux selon la norme NFT90-414 réalisées en sortie des tubes de pression pendant les campagnes de correction des défauts d'étanchéité ont permis de mettre en évidence que lorsque les tubes présentent des valeurs en sulfate atypiques (par comparaison avec les autres tubes du bloc comme il est montré dans la figure 2b, des fuites de germes peuvent apparaître.

Les résultats des analyses issus de la norme NFT90-414 ont fait l'objet d'une notation arbitraire qui permet une comparaison des échantillons les uns par rapport aux autres, le barème était le suivant :

Présence de colonie coliforme positif :

- Note 10 = 1 colonie
- Note 20 = 2 colonies
- Note 30 = 3 colonies....

Absence de colonie coliforme positif et absence de flore interférente non pathogène :

- Note 0

Absence de colonie coliforme positif mais présence de flore interférente non pathogène (saprophytes) :

- Note 1 = 0 à 10 saprophytes
- Note 2 = 11 à 50 saprophytes
- Note 3 = 51 à 100 saprophytes
- Note 4 = supérieur à 100 saprophytes
- Note 5 = gélose recouverte.

Les notes s'ajoutent lorsque les résultats comportent à la fois des réponse coli positives et des saprophytes, par exemple une note de 23 correspond à deux coliformes comptés ainsi que 53 saprophytes comptés.

Les mesures bactériologiques ne peuvent être interprétées que statistiquement car les réponses positives peuvent être biaisées (contamination) ainsi que les réponses négatives car le prélèvement est effectué sur 100ml d'échantillon.

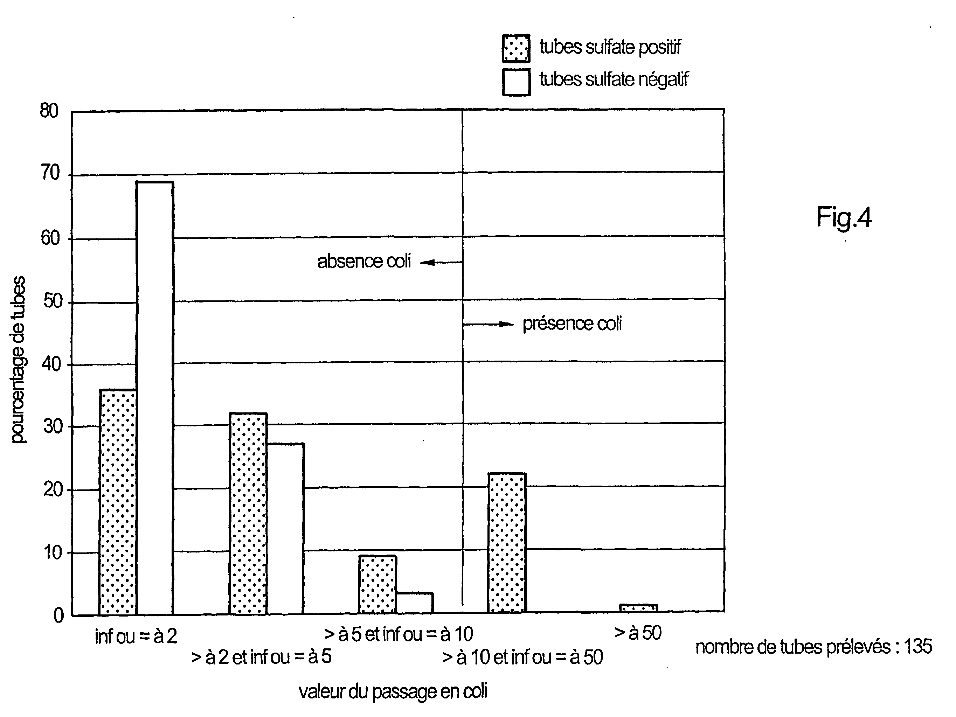

Les résultats de 135 prélèvements effectués dans le perméat de tubes avant correction et après correction sont reportés dans la fig 4.

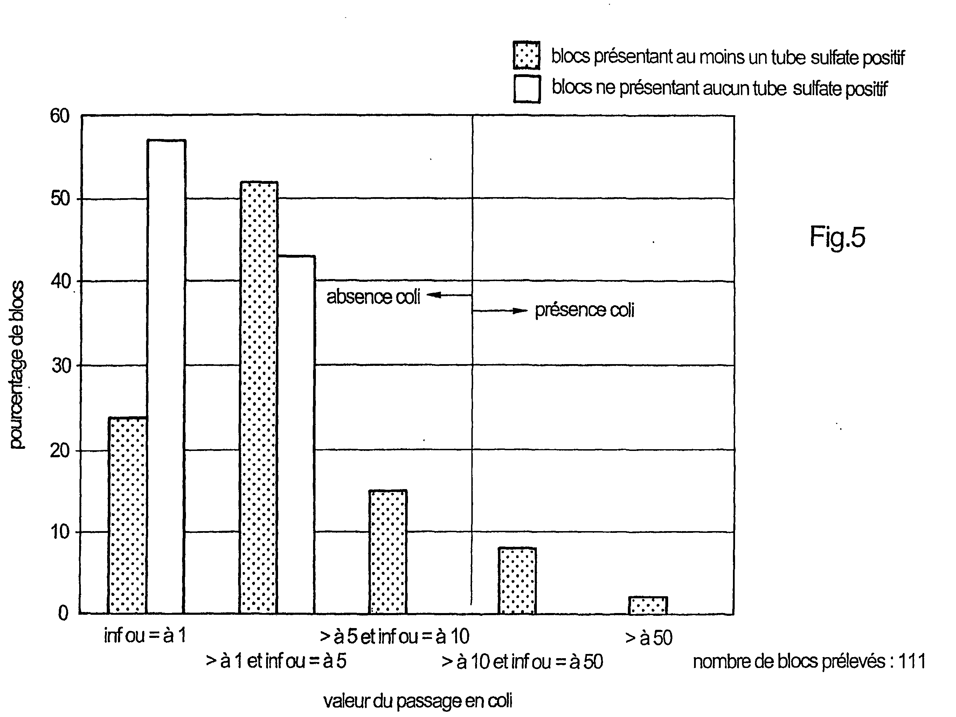

Au niveau des blocs, qui sont constitués de 28 ou 54 tubes dans l'application de Méry-sur-Oise, la conséquence d'un tube ou plusieurs tubes dont l'étanchéité n'est pas absolue est représentée dans la figure 5.

Tableau 1

| Composé | Passage | passage trop important | Fonction du pH | Peu présent dans les eaux naturelles | Précision de l'analyse insuffisante |
|---|---|---|---|---|---|
| Aluminium | 10 % à 50 % | x | ? | x | x |
| Baryum, strontium | 10 % à 50 % | x | | x | x |
| Calcium | 10 % à 60 % | x | | | |
| Chlorures | 50 % à 80 % | x | | | |
| Conductivité | 20 % à 60 % | x | | | |
| Carbone Organique | 0 à 20 % | x | | | x |
| Cuivre | 0 à 5 % | | | x | |
| Fluor | 30 % à 50 % | x | | | |
| Fer | 0 à 5 % | | | x | x |
| Bicarbonates | 10 % à 60 % | x | x | | |
| Potassium | 40 % à 70 % | x | | x | |
| Magnésium | 10 % à 40 % | x | | | |
| Manganèse | Jusqu'à 40 % | x | | x | |
| Sodium | 50 % à 80 % | x | | | |
| Ammonium, nitrites et nitrates | 50 % à 80 % | x | | x | x |
| Phosphate | 0 à 20 % | | ? | x | x |
| Silice | Jusqu'à 80 % | x | x | | x |
| Sulfate | Inférieur à 5% | | | | |

Tableau 2 :

**File membrane N°1 Bloc N°4 Tube N° 62**

| Température de l'eau : 4 °C | | |
|---|---|---|

| | | 21/12/99 |
|---|---|---|
| Emplacement | Longueur de sonde introduite (mm) | Sulfates (mg/l) |
| Origine prélèvement | 0 | |
| Début connecteur entrée | 509 | 80 |
| Fin connecteur entrée | 725 | 150 |
| Milieu membrane 1 | 1200 | 21 |
| Début connecteur 1 | 1635 | 10 |
| Fin connecteur 1 | 1782 | 8 |
| Milieu membrane 2 | 2216 | 2 |
| Début connecteur 2 | 2651 | 1 |
| Fin connecteur 2 | 2798 | 3 |
| Milieu membrane 3 | 3232 | 2 |
| Début connecteur 3 | 3667 | 0 |
| Fin connecteur 3 | 3814 | 1 |
| Milieu membrane 4 | 4248 | 2 |
| Début connecteur 4 | 4683 | 0 |
| Fin connecteur 4 | 4830 | 1 |
| Milieu membrane 5 | 5264 | 0 |
| Début connecteur 5 | 5699 | 4 |
| Fin connecteur 5 | 5846 | 2 |
| Milieu membrane 6 | 6280 | 0 |
| Début connecteur sortie | 6747 | 1 |
| Fin connecteur sortie | 6926 | 3 |
| Fin embout perméat | 7045 | 2 |

**Revendications**

1. Procédé de contrôle de l'intégrité d'un système de modules de nanofiltration ou d'osmose inverse destiné au traitement d'un fluide d'alimentation et de détection de fuites en micro-organismes vivants, chaque module comportant des membranes de nanofiltration ou d'osmose inverse et des joints de connexion de ces membranes, comportant des étapes consistant à :

   • choisir dans le fluide d'alimentation à traiter un composé dissous présent en quantité significative mais normalement fortement arrêté par les membranes,
   • mesurer la valeur de la concentration de ce composé dans une zone aval d'un module de ce système,
   • comparer cette valeur mesurée à une valeur de référence, et
   • reconnaître l'existence dans le système d'un défaut susceptible de laisser passer une quantité détectable de microorganismes lorsque cette valeur mesurée est supérieure à la valeur de référence.

2. Procédé selon la revendication 1, **caractérisé en ce que**, le système comportant au moins une pluralité de modules montés en parallèle, ce procédé comporte des étapes consistant à :

   * mesurer la valeur de la concentration de ce composé dissous dans des zones analogues aval de chaque module de cette pluralité,
* comparer ces valeurs mesurées pour chaque module,
* identifier celles de ces valeurs qui sont les plus faibles, et identifier comme valeur de référence une valeur au moins approximativement égale à ces valeurs les plus faibles,
* reconnaître l'existence d'un défaut dans l'un des modules montés en parallèle lorsque la valeur mesurée pour ce module est supérieure à cette valeur de référence.

3. Procédé selon la revendication 1, **caractérisé en ce que**, le système comportant une pluralité de séries de modules montées en parallèle, ce procédé comporte des étapes consistant à :

* mesurer la valeur de la concentration de ce composé dissous dans des zones analogues de chaque série,
* comparer ces valeurs mesurées pour chaque série,
* identifier celles de ces valeurs qui sont les plus faibles, et identifier comme valeur de référence une valeur au moins approximativement égale à ces valeurs les plus faibles,
* reconnaître l'existence d'un défaut dans l'une de ces séries lorsque la valeur mesurée pour cette série est sensiblement supérieure à cette valeur de référence.

4. Procédé selon la revendication 3, **caractérisé en ce qu'**il comporte en outre des étapes consistant à :

* mesurer la valeur de la concentration de ce composé dissous en plusieurs zones choisies le long d'une série de modules,
* prendre pour chaque valeur de la concentration mesurée pour une zone donnée une valeur de référence sensiblement égale à la valeur de la concentration mesurée pour la zone située immédiatement en amont de cette zone donnée ou, à défaut, de la zone située immédiatement en aval de celle-ci, et
* reconnaître l'existence d'un défaut dans une zone donnée lorsque la valeur qui y est mesurée est supérieure à la valeur de référence associée.

5. Procédé selon la revendication 4, **caractérisé en ce que** les zones choisies le long de la série de modules comportent au moins une zone aval de chaque module et une zone de chaque connecteur reliant un module au suivant.

6. Procédé selon l'une quelconque des revendications 3 à 5, **caractérisé en ce que** on mesure la valeur de la concentration de ce composé dissous dans un échantillon de fluide prélevé dans une zone contenant du fluide provenant de chaque module de cette série,

7. Procédé selon la revendication 1, **caractérisé en ce que**, le système comportant au moins une série de modules, ce procédé comporte des étapes consistant à :

* mesurer la valeur de la concentration de ce composé dissous en plusieurs zones choisies le long de la série de modules,
* prendre pour chaque valeur de la concentration mesurée pour une zone donnée une valeur de référence sensiblement égale à la valeur de la concentration mesurée pour la zone située immédiatement en amont de cette zone donnée ou, à défaut, de la zone située immédiatement en aval de celle-ci, et
* reconnaître l'existence d'un défaut dans une zone donnée lorsque la valeur qui y est mesurée est supérieure à la valeur de référence associée.

8. Procédé selon la revendication 7, **caractérisé en ce que** les zones choisies le long de la série de modules comportent au moins une zone aval de chaque module et une zone de chaque connecteur reliant un module au suivant.

9. Procédé selon l'une quelconque des revendications 1, 7 ou 8, **caractérisé en ce que** le système, comportant au moins une série de modules, on mesure la valeur de la concentration de ce composé dissous dans un échantillon de fluide prélevé dans une zone contenant du fluide provenant de chaque module de cette série.

10. Procédé selon l'une quelconque des revendications 1 à 9, **caractérisé en ce que** le composé dissous dont on mesure la concentration est le sulfate.

**Claims**

1. A method of checking the integrity of a system of nanofiltration or reverse osmosis modules adapted for the treatment of a supply fluid and of detecting leaks of living micro-organisms, each module comprising nanofiltration or reverse osmosis membranes and connection joints of these membranes, comprising steps consisting of:

   • choosing in the supply fluid to be treated a dissolved compound which is in significant quantity but which is normally strongly kept back by the membranes,
   • measuring the value of the concentration of the compound in a downstream zone of a module of that system,
   • comparing that measured value with a reference value, and
   • recognizing the existence of a defect in the system liable to let through a detectable quantity of microorganisms when that measured value is greater than the reference value.

2. A method according to claim 1, **characterized in that**, the system comprising at least a plurality of modules mounted in parallel, this method comprises steps consisting of:

   * measuring the value of the concentration of that dissolved compound in similar downstream zones of each module of that plurality,
   * comparing these measured values for each module,
   * identifying those of these values which are the least, and identifying as reference value a value at least approximately equal to those least values,
   * recognizing the existence of a defect in one of the modules mounted in parallel when the measured value for that module is greater than that reference value.

3. A method according to claim 1, **characterized in that**, the system comprising a plurality of series of modules mounted in parallel, this method comprises steps consisting of:

   * measuring the value of the concentration of that dissolved compound in similar zones of each series,
   * comparing these measured values for each series,
   * identifying those of these values which are the least, and identifying as reference value a value at least approximately equal to those least values,
   * recognizing the existence of a defect in one of these series when the measured value for that series is clearly greater than that reference value.

4. A method according to claim 3, **characterized in that** it comprises in addition steps consisting of:

   * measuring the value of the concentration of that dissolved compound in a plurality of zones chosen along a series of modules,
   * for each value of the concentration measured for a given zone, taking a reference value substantially equal to the value of the concentration measured for the zone situated immediately upstream of that given zone or, if lacking, of the zone situated immediately downstream of it, and
   * recognizing the existence of a defect in a given zone when the value which is measured there is greater than the associated reference value.

5. A method according to claim 4, **characterized in that** the zones chosen along the series of modules comprise at least one zone downstream of each module and one zone of each connector connecting a module to the following one.

6. A method according to any one of claims 3 to 5, **characterized in that** the value of the concentration of that dissolved compound is measured in a sample of fluid taken from a zone containing fluid coming from each module of that series.

7. A method according to claim 1, **characterized in that**, the system comprising at least one series of modules, this method comprises steps consisting of:

   * measuring the value of the concentration of that dissolved compound in a plurality of zones chosen along the series of modules,
   * for each value of the concentration measured for a given zone, taking a reference value substantially equal to the value of the concentration measured for the zone situated immediately upstream of that given zone or, if lacking, of the zone situated immediately downstream of it, and

* recognizing the existence of a defect in a given zone when the value which is measured there is greater than the associated reference value.

**8.** A method according to claim 7, **characterized in that** the zones chosen along the series of modules comprise at least one zone downstream of each module and one zone of each connector connecting a module to the following one.

**9.** A method according to any one of claims 1, 7, or 8, **characterized in that**, the system comprising at least one series of modules, the value of the concentration of that dissolved compound is measured in a sample of fluid taken from a zone containing fluid coming from each module of that series.

**10.** A method according to any one of claims 1 to 9, **characterized in that** the dissolved compound of which the concentration is measured is sulfate.

**Patentansprüche**

**1.** Verfahren zum Steuern der Integrität eines Systems von Modulen zur Nanofiltrierung oder inversen Osmose, das für die Behandlung eines Versorgungsfluids und für die Erfassung des Entweichens lebender Mikroorganismen bestimmt ist, wobei jedes Modul Membranen zur Nanofilterung oder inversen Osmose und Verbinder für die Verbindung dieser Membranen umfasst, wobei das Verfahren die Schritte umfasst, die darin bestehen:

- in dem zu behandelnden Versorgungsfluid eine gelöste Zusammensetzung auszuwählen, die in einer signifikanten Menge vorhanden ist, jedoch normalerweise durch die Membranen im Wesentlichen aufgehalten wird,
- den Wert der Konzentration dieser Zusammensetzung in einer Zone auf der Auslassseite eines Moduls dieses Systems zu messen,
- diesen gemessenen Wert mit einem Referenzwert zu vergleichen und
- das Vorhandensein eines Fehlers in dem System zu erkennen, der eine erfassbare Menge von Mikroorganismen durchlassen kann, wenn dieser gemessene Wert größer als der Referenzwert ist.

**2.** Verfahren nach Anspruch 1, **dadurch gekennzeichnet, dass** es dann, wenn das System wenigstens eine Mehrzahl parallel montierter Module umfasst, die Schritte umfasst, die darin bestehen:

- den Wert der Konzentration dieser gelösten Zusammensetzung in analogen Zonen auf der Auslassseite jedes Moduls dieser Mehrzahl zu messen,
- diese gemessenen Werte für jedes Modul zu vergleichen,
- jene dieser Werte zu identifizieren, die am kleinsten sind, und einen Wert als Referenzwert zu identifizieren, der wenigstens angenähert gleich diesen kleinsten Werten ist,
- das Vorhandensein eines Fehlers in einem der parallel angebrachten Module zu erkennen, wenn der für dieses Modul gemessene Wert größer als dieser Referenzwert ist.

**3.** Verfahren nach Anspruch 1, **dadurch gekennzeichnet, dass** es dann, wenn das System mehrere Reihen parallel montierter Modulen umfasst, die Schritte umfasst, die darin bestehen:

- den Wert der Konzentration dieser gelösten Zusammensetzung in analogen Zonen jeder Reihe zu messen,
- diese gemessenen Werte für jede Reihe zu vergleichen,
- jene dieser Werte zu identifizieren, die am kleinsten sind, und einen Wert, der wenigstens angenähert gleich diesen kleinsten Werten ist, als Referenzwert zu identifizieren,
- das Vorhandensein eines Fehlers in einer dieser Reihen zu erkennen, wenn der gemessene Wert für diese Reihe wesentlich größer als dieser Referenzwert ist.

**4.** Verfahren nach Anspruch 3, **dadurch gekennzeichnet, dass** es außerdem die Schritte umfasst, die darin bestehen:

- den Wert der Konzentration dieser gelösten Zusammensetzung in mehreren Zonen zu messen, die längs einer Reihe von Modulen gewählt werden,

- für jeden für eine gegebene Zone gemessenen Konzentrationswert einen Referenzwert zu verwenden, der im Wesentlichen gleich dem Wert der Konzentration ist, die für die unmittelbar vor dieser gegebenen Zone befindliche Zone oder statt dessen für die unmittelbar hinter dieser gegebenen Zone befindliche Zone gemessen wird, und

- Erkennen des Vorhandenseins eines Fehlers in einer gegebenen Zone, wenn der Wert, der hier gemessen wird, größer als der zugeordnete Referenzwert ist.

5. Verfahren nach Anspruch 4, **dadurch gekennzeichnet, dass** die Zonen, die längs der Reihe von Modulen gewählt werden, wenigstens eine auf der Auslassseite jedes Moduls befindliche Zone und wenigstens eine Zone jedes Verbinders, der ein Modul mit dem folgenden verbindet, enthalten.

6. Verfahren nach einem der Ansprüche 3 bis 5, **dadurch gekennzeichnet, dass** der Wert der Konzentration dieser gelösten Zusammensetzung in einer Fluidprobe gemessen wird, die in einer Zone entnommen wird, die das von jedem Modul dieser Reihe stammende Fluid enthält.

7. Verfahren nach Anspruch 1, **dadurch gekennzeichnet, dass** es dann, wenn das System wenigstens eine Reihe von Modulen enthält, die Schritte umfasst, die darin bestehen:

- den Wert der Konzentration dieser gelösten Zusammensetzung in mehreren Zonen zu messen, die längs der Reihen von Modulen gewählt werden,

- für jeden Wert der Konzentration, der für eine gegebene Zone gemessen wird, einen Referenzwert zu verwenden, der im Wesentlichen gleich dem Wert der Konzentration ist, die für die unmittelbar vor dieser gegebenen Zone befindliche Zone oder statt dessen für die unmittelbar hinter dieser gegebenen Zone befindliche Zone gemessen wird, und

- das Vorhandensein eines Fehlers in einer gegebenen Zone zu erkennen, wenn der Wert, der hier gemessen wird, größer als der zugeordnete Referenzwert ist.

8. Verfahren nach Anspruch 7, **dadurch gekennzeichnet, dass** die Zonen, die längs der Reihe von Modulen gewählt werden, wenigstens eine Zone hinter jedem Modul und eine Zone jedes Verbinders, der ein Modul mit dem folgenden verbindet, enthalten.

9. Verfahren nach einem der Ansprüche 1, 7 oder 8, **dadurch gekennzeichnet, dass** dann, wenn das System wenigstens eine Reihe von Modulen umfasst, der Wert der Konzentration dieser gelösten Zusammensetzung in einer Fluidprobe gemessen wird, die in einer Zone entnommen wird, die das von jedem Modul dieser Reihe stammende Fluid enthält.

10. Verfahren nach einem der Ansprüche 1 bis 9, **dadurch gekennzeichnet, dass** die gelöste Zusammensetzung, deren Konzentration gemessen wird, Sulfat ist.

profil en long dans un tube contenant 6 éléments :
cas d'un premier étage

profil de référence : SO4 en sortie du tube = 1.1
fuite au troisième élément : SO4 en sortie du tube = 5.9

Fig.1a

teneur en sulfate

position de l'élément dans le tube

EP 1 289 634 B1

profil en long dans un tube contenant 6 éléments : cas d'un deuxième étage

profil de référence : $SO_4$ en sortie du tube = 2.3

fuite au troisième élément : $SO_4$ en sortie du tube = 12.9

Fig.1b

teneur en sulfate

position de l'élément dans le tube

EP 1 289 634 B1

profil en long dans un tube contenant 6 éléments :
cas d'un troisième étage (deux fuites)

→◆→ profil de référence : SO4 en sortie du tube = 4.3
→■→ fuite au troisième élément : SO4 en sortie du tube = 22.8

Fig.1c

teneur en sulfate

70.0

60.0

50.0

40.0

30.0

20.0

10.0

0.0

3-1      3-2      3-3      3-4      3-5      3-6

position de l'élément dans le tube

EP 1 289 634 B1

Fig.2a

moyenne des 28 tubes

conductivité du perméat du tube

numéro du tube (28 tubes dans un bloc)

EP 1 289 634 B1

Fig.2b

Fig.3

EP 1 289 634 B1

tubes sulfate positif

tubes sulfate négatif

pourcentage de tubes

80

70

60

absence coli

50

présence coli

40

30

20

10

0

inf ou = à 2

> à 2 et inf ou = à 5

> à 5 et inf ou = à 10

> à 10 et inf ou = à 50

> à 50

nombre de tubes prélevés : 135

valeur du passage en coli

Fig.4

EP 1 289 634 B1

Fig.5

blocs présentant au moins un tube sulfate positif

blocs ne présentant aucun tube sulfate positif

pourcentage de blocs

60

50

40

30

20

10

0

absence coli ← → présence coli

inf ou = à 1

> à 1 et inf ou = à 5

> à 5 et inf ou = à 10

> à 10 et inf ou = à 50

> à 50

nombre de blocs prélevés : 111

valeur du passage en coli

EP 1 289 634 B1